# EUROPÄISCHE PATENTSCHRIFT

(11) **EP 2 457 716 B1**
(45) Veröffentlichungstag und Bekanntmachung des Hinweises auf die Patenterteilung: **06.03.2013**
(21) Anmeldenummer: 10192789.5
(22) Anmeldetag: 26.11.2010
(51) Int. Cl.: B29C 65/00, F16F 1/02, B65B 61/26, B29C 65/02

(54) **Siegelelement zum Erzeugen glatter Prägefelder bei der Versiegelung von Folien**
Seal element for producing smooth shaping fields when sealing film
Elément de scellement pour produire des champs d'imprégnation lisses lors du scellement de feuilles

(43) Veröffentlichungstag der Anmeldung: 30.05.2012
(73) Patentinhaber: UHLMANN PAC-SYSTEME GmbH & Co. KG, 88471 Laupheim (DE)
(72) Erfinder: Krahl, Wolfgang, 88471 Laupheim (DE)
(74) Vertreter: Wächter, Jochen

(56) Entgegenhaltungen:
- DE-A1- 1 810 243
- DE-A1- 3 236 164
- DE-A1- 4 420 808
- DE-A1- 19 904 154
- DE-B3-102006 010 023
- I.Caron: "Expanded hole method for arresting crack propagation: residual stress determination using neutron diffraction", Physica B: Condensed Matter Proceedings of the Third European Conference on Neutron Scattering, Bd. Volume 350, Issues 1-3, Supplement 1, 15. Juli 2004 (2004-07-15), Seiten E503-E505, XP002631298, DOI: doi:10.1016/j.physb.2004.03.132 Gefunden im Internet: URL:http://www.sciencedirect.com/science?_ ob=ArticleURL&_udi=B6TVH-4C7DG8F-9&_user=9 87766&_coverDate=07%2F15%2F2004&_rdoc=1&_f mt=high&_orig=gateway&_origin=gateway&_sor t=d&_docanchor=&view=c&_acct=C000049880&_v ersion=1&_urlVersion=0&_userid=987766&md5= 62deaa19c63fe14080119e3245ad0aa4&searchtyp e=a [gefunden am 2011-04-06]

## Beschreibung

Die vorliegende Erfindung betrifft ein Siegelelement zum Erzeugen glatter Prägefelder bei der Versiegelung zweier Folien.

Bei der Herstellung von Blisterverpackungen, insbesondere in der pharmazeutischen Industrie, wird zunächst eine Formfolie mit eingeformten Näpfen, in die die Produkte gefüllt werden, erzeugt. Die Formfolie wird anschließend in einer Siegelstation einer Thermoformmaschine in Bereichen außerhalb der Näpfe mit einer Deckfolie versiegelt. Dabei kann die Siegelstation kontinuierlich mit zwei aufeinander abrollenden Siegelwalzen oder diskontinuierlich mit einander gegenüberliegenden Siegelplatten arbeiten. Nach Versiegelung der beiden Folien ist es oftmals notwendig, Chargennummern oder andere Informationen gezielt und unlösbar auf das produzierte Blisterband zu prägen, bevor die einzelnen Blisterverpackungen aus dem Blisterband ausgestanzt werden. Damit die mechanisch eingeprägten Informationen besser lesbar sind, wird die dazu erforderliche Fläche, nämlich das Codingfeld bzw. Prägefeld, nicht mit zwei herkömmlichen Siegelwerkzeugen gesiegelt, da die Riffel auf der Oberfläche der Siegelwerkzeuge eine gewisse Welligkeit in der Deckfolie erzeugen würden. Stattdessen enthält eines der beiden Siegelwerkzeuge im Bereich des gewünschten Prägefeldes ein Siegelelement, das in eine Ausnehmung des Siegelwerkzeugs eingeführt und dort durch eine Federkonstruktion abgestützt ist. Durch die fortwährende Belastung der Feder unterliegt diese einem starken Verschleiß, wobei sich auch die Federkennlinie ändern kann.

Zur Reduzierung der Verschleißanfälligkeit des Siegelelements wurde in DE 10 2006 010 023 B3 eine integrierte Federkonstruktion in einem Siegelelement vorgeschlagen. Hierzu sind in dem Siegelelement zwei Schlitze vorgesehen, die höhenversetzt jeweils von gegenüberliegenden Seiten in den Grundkörper des Siegelelements hineinragen und zwischen denen ein dünner Biegebalken ausgebildet ist, der bei mechanischem Druck federnd verformbar ist. Allerdings ist auch bei derartigen Siegelelementen ein Verschleiß aufgrund von Materialermüdung nicht vollständig auszuschließen, und insbesondere können derartige Siegelelemente bei durch Fehlbedienung hervorgerufenem zu hohem Druck plastisch verformt und somit zerstört werden.

Der vorliegenden Erfindung liegt die Aufgabe zugrunde, ein Siegelelement zum Erzeugen glatter Prägefelder bei der Versiegelung zweier Folien zu schaffen, das dauerfest im Betrieb und resistent gegen jegliche Art von Fehlbedienung ist.

Diese Aufgabe wird durch die Merkmale des Anspruchs 1 gelöst.

Erfindungsgemäß weist das Siegelelement für die Integration in ein Siegelwerkzeug zum Erzeugen glatter Prägefelder bei der Versiegelung zweier Folien einen Grundkörper auf, der eine obere Oberfläche, eine untere Oberfläche zum Ausüben einer Siegelkraft auf die Folien, zwei sich gegenüberliegende schmale Seitenflächen und zwei sich gegenüberliegende breite Seitenflächen aufweist. Außerdem sind im Grundkörper ein erster Schlitz und ein zweiter Schlitz ausgebildet, die ein Federelement bilden, wobei der erste Schlitz von einer ersten schmalen Seitenfläche aus in den Grundkörper hinein ragt und der zweite Schlitz höhenversetzt zum ersten Schlitz von einer zweiten schmalen Seitenfläche aus in den Grundkörper derart hineinragt, dass die beiden Schlitze einen Abschnitt des Grundkörpers definieren, der im Wesentlichen S-Form oder umgekehrte S-Form aufweist. Die beiden Schlitze weiten sich an ihrem inneren Endbereich jeweils zu einer Bohrung auf.

Zum Aufbau eines mehrschichtigen Federelements sind die Schlitze vorzugsweise U-förmig gestaltet, wobei jeweils ein erster Schenkel des Schlitzes länger ist als ein zweiter Schenkel des Schlitzes.

Mit dieser Gestaltung ist das Siegelelement besonders widerstandsfähig und kann selbst bei Fehlbedienungen nicht zerstört werden.

Vorzugsweise weisen die Schlitze eine geringe Höhe auf. Durch die Höhe der Schlitze wird der maximale Federweg bestimmt, der bei der vorliegenden Anwendung nicht besonders groß sein muss. Umgekehrt bewirken Schlitze geringer Höhe eine genügend hohe Federsteifigkeit.

Um die Federkraft möglichst gleichmäßig auf die zu siegelnden Folien wirken zu lassen, durchdringen die Schlitze den Grundkörper in einer Querrichtung von einer ersten breiten Seitenfläche zu einer zweiten breiten Seitenfläche vollständig.

Zum Erreichen einer maximalen Federkraft bei gleichzeitiger Minimierung der Materialspannung im Grundkörper sind die beiden zweiten Schenkel zwischen den beiden ersten Schenkeln angeordnet, ist die Bohrung des ersten Schlitzes innerhalb der U-Form des zweiten Schlitzes gegenüber dem Bogenbereich des zweiten Schlitzes angeordnet und ist die Bohrung des zweiten Schlitzes innerhalb der U-Form des ersten Schlitzes gegenüber dem Bogenbereich des ersten Schlitzes angeordnet. Auf diese Weise wird die durch eine Kompression der Federanordnung erzeugte Materialspannung großflächig vor allem in die Bogenabschnitte des Grundkörpers im Bereich der S-Form geleitet.

Vorzugsweise ist das Siegelelement aus Edelstahl gebildet. Damit werden Spannungsspitzen vermieden und das Material wird nicht kritisch beansprucht.

Zum Erzielen eines ausreichenden Siegeldrucks liegt das Verhältnis des Abstandes zwischen den beiden schmalen Seitenflächen zum Abstand zwischen oberer Oberfläche und unterer Oberfläche in der Regel nicht oberhalb von 1,8:1, vorzugsweise nicht oberhalb von 1,5:1.

Die im Querschnitt ovalen oder vorzugsweise kreisförmigen Bohrungen besitzen im Bereich ihrer vertikalen Mittelachse eine deutlich größere Höhe als die Schlitze, beispielsweise das 3- bis 10-fache, vorzugsweise das 5- bis 8-fache. Die Breite der Bohrungen entlang ihrer horizontalen Mittelachse ist bei kreisförmigen Bohrungen identisch zur Höhe, bei ovalen Bohrungen nicht weit davon entfernt. Auf diese Weise werden die Spannungen im Material unter Vermeidung unzulässiger Spannungsspitzen breitflächig verteilt.

Zum Erzielen einer längeren Prägefläche ist ein Siegelkörper mit mindestens zwei einstückig miteinander verbundenen Siegelelementen geeignet, wobei sich die einander zugewandten schmalen Seitenflächen der Siegelelemente lediglich über einen Teil der Höhe der Siegelelemente erstrecken und voneinander beabstandet sind, und wobei die Verbindung zwischen den Siegelelementen über einen Steg erfolgt, der unterhalb dieser einander zugewandten schmalen Seitenflächen der Siegelelemente ausgebildet ist.

Weitere Merkmale und Vorteile der vorliegenden Erfindung ergeben sich aus der nachfolgenden Beschreibung unter Bezugnahme auf die Zeichnungen.
- Fig. 1: ist eine Perspektivansicht einer Ausführungsform des Siegelelements gemäß der vorliegenden Erfindung; und
- Fig. 2: ist ein Siegelkörper aus zwei integral miteinander verbundenen Siegelelementen gemäß der vorliegenden Erfindung.

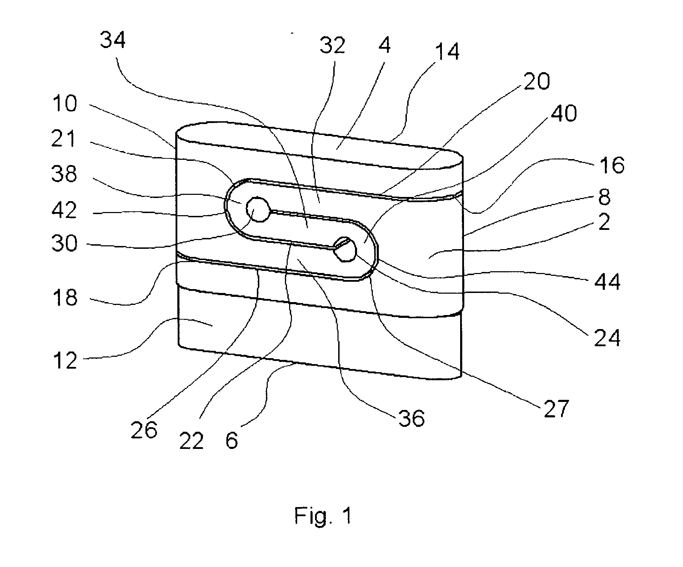

In Fig. 1 ist eine Ausführungsform des Siegelelements 1 gemäß der vorliegenden Erfindung dargestellt. Das Siegelelement 1 dient dazu, in eine Ausnehmung eines Siegelwerkzeugs (nicht dargestellt) eingesetzt zu werden, um bei der Versiegelung zweier Folien in einer Siegelstation ein glattes Prägefeld zu erzeugen. Hierzu ist eine bestimmte Kraft erforderlich, die durch ein integriertes Federelement erzeugt wird, wie im Folgenden näher beschrieben wird.

Das Siegelelement weist einen Grundkörper 2 auf, der eine obere Oberfläche 4 aufweist, die in eine Ausnehmung des Siegelwerkzeugs versenkt wird und von einem Steg des Siegelwerkzeugs selbst oder von einer Siegelwerkzeughalterung gestützt wird. Der oberen Oberfläche 4 liegt eine untere Oberfläche 6 des Siegelelements 1 gegenüber, die glatt ausgebildet ist und eine Siegelkraft auf die zu siegelnden Folien aufbringen soll. Ferner weist der Grundkörper 2 zwei sich gegenüberliegende schmale Seitenflächen 8, 10 und zwei sich gegenüberliegende breite Seitenflächen 12, 14 auf.

Das Material des Grundkörpers 2 ist üblicherweise Edelstahl, es kommt aber für bestimmte Anwendungen auch Federstahl in Frage. Üblicherweise besitzt der Grundkörper 2 eine Länge von zwischen 50 bis 100 mm, eine Breite von zwischen 3 und 10 mm und eine Höhe von zwischen 11 und 50 mm. Insgesamt sollte das Verhältnis des Abstandes zwischen den beiden schmalen Seitenflächen 8, 10 zum Abstand zwischen oberer Oberfläche 4 und unterer Oberfläche 6 1,8:1 nicht übersteigen, vorzugsweise 1,5:1 nicht übersteigen.

Zur Bildung eines integrierten Federelements sind im Grundkörper 2 ein erster Schlitz 16 und ein zweiter Schlitz 18 ausgebildet. Der erste Schlitz 16 ragt von der ersten schmalen Seitenfläche 8 aus in den Grundkörper 2 hinein, und der zweite Schlitz 18 ragt höhenversetzt zum ersten Schlitz 16 von der zweiten schmalen Seitenfläche 10 aus in den Grundkörper 2 hinein.

Die beiden Schlitze 16, 18 durchdringen den Grundkörper 2 in einer Querrichtung von der ersten breiten Seitenfläche 12 zur zweiten breiten Seitenfläche 14 vollständig, weisen allerdings eine relativ geringe Höhe auf, vorzugsweise zwischen 0,3 und 0,5 mm. Die maximale Verformung des Federelements in Höhenrichtung ist durch die Höhe der Schlitze 16, 18 limitiert. Der erste Schlitz 16 ist U-förmig gestaltet und weist einen längeren ersten Schenkel 20 und einen kürzeren zweiten Schenkel 22 auf. Der erste Schenkel 20 verläuft dabei im Wesentlichen horizontal von der ersten schmalen Seitenfläche 8 in den Grundkörper 2 hinein, bis er bei etwa 60 % bis 90 %, vorzugsweise 70 bis 80 % der Länge des Grundkörpers 2 in einem Bogenbereich 21 nach unten abknickt und dann in den zweiten Schenkel 22 übergeht. Der Abstand zwischen erstem Schenkel 20 und zweitem Schenkel 22 liegt in der Regel zwischen 2 und 5 mm.

Der erste Schlitz 20 weitet sich an seinem inneren Endbereich zu einer Bohrung 24 auf. Diese Bohrung 24 ist oval oder vorzugsweise kreisförmig und besitzt eine Höhe im Bereich ihrer vertikalen Mittelachse vom 3- bis 10-fachen, vorzugsweise vom 5- bis 8-fachen der Höhe des ersten Schlitzes 20. Die Breite der Bohrung 2 entlang ihrer horizontalen Mittelachse ist bei einer kreisförmigen Bohrung 24 identisch zur Höhe, bei einer ovalen Bohrung nicht weit davon entfernt.

Höhenversetzt zum ersten Schlitz 16 verläuft der zweite Schlitz 18 von der zweiten schmalen Seitenfläche 10 aus in entgegengesetzter Richtung wie der erste Schlitz 16 mit seinem ersten Schenkel 26 in den Grundkörper 2 hinein, geht nach oben in einen Bogenbereich 27 und von dort aus in einen kürzeren zweiten Schenkel 28 über. Idealerweise sind die Abmessungen des ersten Schlitzes 16 und des zweiten Schlitzes 18 identisch.

Am inneren Endbereich des zweiten Schenkels 28 des zweiten Schlitzes 18 geht der Schlitz 18 wiederum in eine Bohrung 30 größeren Durchmessers über. Die Bohrung 30 entspricht hinsichtlich ihrer Abmessungen vorzugsweise der Bohrung 24.

Aufgrund der U-Form der beiden Schlitze 16, 18 und den kürzer gestalteten zweiten Schenkeln 22, 28 können diese so angeordnet werden, dass die beiden zweiten Schenkel 22, 28 zwischen den beiden ersten Schenkeln 20, 26 angeordnet sind und die beiden U-Formen ineinander verschachtelt sind. Dabei ist die Bohrung 24 des ersten Schlitzes 16 innerhalb der U-Form des zweiten Schlitzes 18 gegenüber dem Bogenbereich 27 des zweiten Schlitzes 18 angeordnet, und die Bohrung 30 des zweiten Schlitzes 18 ist innerhalb der U-Form des ersten Schlitzes 16 gegenüber dem Bogenbereich 21 des ersten Schlitzes 16 angeordnet. Die Schlitze 16, 18 sind also so gestaltet, dass das Federelement wie eine Bügelfeder arbeitet, und sie definieren einen Abschnitt des Grundkörpers 2, der im Wesentlichen eine S-Form oder eine umgekehrte S-Form aufweist. Dieser Abschnitt wird durch drei im Wesentlichen horizontal verlaufende Stege 32, 34, 36 gebildet, die idealerweise dieselbe Materialstärke besitzen (vorzugsweise zwischen 2 und 5 mm) und nicht als Biegebalken wirken. Die drei horizontal verlaufenden Stege 32, 34, 36 des Grundkörpers 2 sind über Bogenabschnitte 38, 40 verbunden.

Durch eine derartige Anordnung wird die Spannung reduziert, welche bei Druckbeaufschlagung im Siegelelement 1 entsteht; die Dehnung verteilt sich großflächig auf das Siegelelement 1 bei gleichzeitiger Einhaltung einer bestimmten Steifigkeit.

Es hat sich als optimal herausgestellt, wenn die Bogenabschnitte 38, 40, welche die drei horizontal verlaufenden Stege 32, 34, 36 des Grundkörpers 2 im Bereich des S-förmigen oder invertierten S-förmigen Abschnittes des Grundkörpers 2 verbinden, nicht genau konzentrisch um die jeweilige Bohrung 24, 30 herum verlaufen. Stattdessen ist es bevorzugt, wenn der Abstand zwischen dem äußeren Rand der Bohrung 24 des ersten Schlitzes 16 und dem ersten Schenkel 26 des zweiten Schlitzes 18 kleiner ist als der Abstand zwischen dem äußeren Rand der Bohrung 24 und dem Scheitelpunkt 44 des zweiten Schlitzes 18, und der Abstand zwischen dem äußeren Rand der Bohrung 24 des ersten Schlitzes 16 und dem zweiten Schenkel 28 des zweiten Schlitzes 18 kleiner ist als der Abstand zwischen dem äußeren Rand der Bohrung 24 und dem Scheitelpunkt 44 des zweiten Schlitzes 18.

Aufgrund der gewünschten Symmetrie ist umgekehrt vorzugsweise der Abstand zwischen dem äußeren Rand der Bohrung 30 des zweiten Schlitzes 18 und dem ersten Schenkel 20 des ersten Schlitzes 16 kleiner als der Abstand zwischen dem äußeren Rand der Bohrung 30 und dem Scheitelpunkt 42 des ersten Schlitzes 16, und der Abstand zwischen dem äu-βeren Rand der Bohrung 30 des zweiten Schlitzes 18 und dem zweiten Schenkel 22 des ersten Schlitzes 16 ist kleiner als der Abstand zwischen dem äußeren Rand der Bohrung 30 und dem Scheitelpunkt 42 des ersten Schlitzes 16.

Dabei ist vorzugsweise der Abstand zwischen dem äußeren Rand der jeweiligen Bohrung 24, 30 zu den jeweiligen Schenkeln 20, 22, 26, 28 gleich.

Es existiert eine Vielzahl von Variationsmöglichkeiten zu der in Fig. 1 dargestellten Struktur.

Die Geometrie, die Abmessungen, Krümmungsradien und Durchmesser der oben angesprochenen einzelnen Elemente, insbesondere der Schlitze 16, 18, der Bohrungen 24, 30 und der Stege 32, 34, 36 mit den beiden Bogenabschnitten 38, 40 des Grundkörpers 2 können eine Vielzahl von Modifikationen erfahren. Wichtig ist hierbei, dass die erforderliche Federkonstante, die für eine einwandfreie Funktion notwendig ist, immer erhalten bleibt.

Wie bereits erläutert, wird bei der in Fig. 1 dargestellten Ausführungsform die größte Spannung auf die beiden Bogenabschnitte 38, 40 des Grundkörpers 2 im Bereich seines S-förmigen Abschnitts aufgenommen. Die Kontur der Bügelfeder kann durch die Variation der Bohrungen 24, 30 und deren Positionierung eingestellt werden.

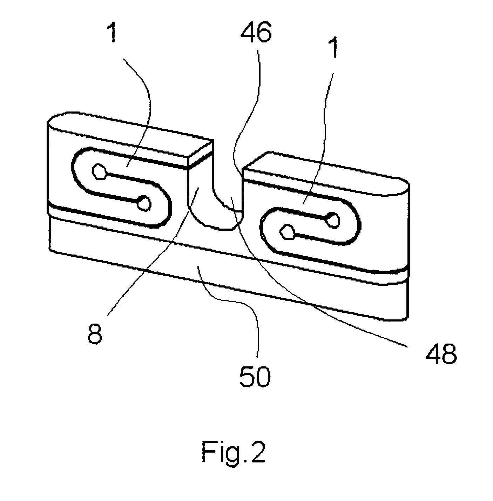

Für die Erzeugung eines sehr langen Prägefeldes kann ein Siegelkörper gemäß Fig. 2 angewendet werden. Dieser Siegelkörper umfasst zwei einstückig miteinander verbundene Siegelelemente 1 gemäß der vorangegangenen Beschreibung. Dabei erstrecken sich die einander zugewandten schmalen Seitenflächen 8, 46 der Siegelelemente 1 lediglich über einen Teil der Höhe der Siegelelemente 1 und sind voneinander durch eine Ausnehmung 48 beabstandet. Die Verbindung zwischen den Siegelelementen 1 erfolgt über einen Steg 50, der unterhalb der einander zugewandten schmalen Seitenflächen 8, 46 der Siegelelemente 1 ausgebildet ist. Bei einem derartigen Siegelkörper ist es vorteilhaft, wenn die beiden Siegelelemente 1 symmetrisch zur Mittelachse des Siegelkörpers ausgebildet sind. Ebenso ist eine Verbindung von mehr als zwei Siegelelementen 1 in einem Siegelkörper denkbar.

## Patentansprüche

1. Siegelelement für die Integration in ein Siegelwerkzeug zum Erzeugen glatter Prägefelder bei der Versiegelung zweier Folien, mit
einem Grundkörper (2), der eine obere Oberfläche (4), eine untere Oberfläche (6) zum Ausüben einer Siegelkraft auf die Folien, zwei sich gegenüberliegende schmale Seitenflächen (8, 10) und zwei sich gegenüberliegende breite Seitenflächen (12, 14) aufweist,
wobei ein erster Schlitz (16) und ein zweiter Schlitz (18) im Grundkörper (2) ausgebildet sind, die ein Federelement bilden, wobei der erste Schlitz (16) von einer ersten schmalen Seitenfläche (8) aus in den Grundkörper (2) hineinragt und der zweite Schlitz (18) höhenversetzt zum ersten Schlitz (16) von einer zweiten schmalen Seitenfläche (10) aus in den Grundkörper (2) derart hineinragt, dass die beiden Schlitze (16, 18) einen Abschnitt des Grundkörpers (2) definieren, der im Wesentlichen S-Form oder umgekehrte S-Form aufweist,
**dadurch gekennzeichnet, dass**
dass die Schlitze (16, 18) U-förmig gestaltet sind, wobei jeweils ein erster Schenkel (20, 26) des Schlitzes (16, 18) länger ist als ein zweiter Schenkel (22, 28) des Schlitzes (16, 18), und dass die beiden Schlitze (16, 18) sich an ihrem inneren Endbereich jeweils zu einer Bohrung (24, 30) aufweiten.

2. Siegelelement nach Anspruch 1, **dadurch gekennzeichnet, dass** die Schlitze (16, 18) eine geringe Höhe aufweisen.

3. Siegelelement nach Anspruch 1 oder 2, **dadurch gekennzeichnet, dass** die Schlitze (16, 18) den Grundkörper (2) in einer Querrichtung von einer ersten breiten Seitenfläche (12) zu einer zweiten breiten Seitenfläche (14) durchdringen.

4. Siegelelement nach einem der vorangehenden Ansprüche, **dadurch gekennzeichnet, dass** die beiden zweiten Schenkel (22, 28) zwischen den beiden ersten Schenkeln (20, 26) angeordnet sind, dass die Bohrung (24) des ersten Schlitzes innerhalb der U-Form des zweiten Schlitzes (18) gegenüber dem Bogenbereich (27) des zweiten Schlitzes (18) angeordnet ist und dass die Bohrung (30) des zweiten Schlitzes innerhalb der U-Form des ersten Schlitzes (16) gegenüber dem Bogenbereich (21) des ersten Schlitzes (16) angeordnet ist.

5. Siegelelement nach Anspruch 4, **dadurch gekennzeichnet, dass** der Abstand zwischen dem äußeren Rand der Bohrung (24) des ersten Schlitzes (16) und dem ersten Schenkel (26) des zweiten Schlitzes (18) kleiner ist als der Abstand zwischen dem äußeren Rand der Bohrung (24) des ersten Schlitzes (16) und dem Scheitelpunkt (44) des zweiten Schlitzes (18), und dass der Abstand zwischen dem äußeren Rand der Bohrung (24) des ersten Schlitzes (18) und dem zweiten Schenkel (28) des zweiten Schlitzes (18) kleiner ist als der Abstand zwischen dem äußeren Rand der Bohrung (24) des ersten Schlitzes (16) und dem Scheitelpunkt (44) des zweiten Schlitzes (18).

6. Siegelelement nach Anspruch 5, **dadurch gekennzeichnet, dass** der Abstand zwischen dem äußeren Rand der Bohrung (24) des ersten Schlitzes (16) und dem ersten Schenkel (26) des zweiten Schlitzes (18) gleich dem Abstand zwischen dem äu-βeren Rand der Bohrung (24) des ersten Schlitzes (16) und dem zweiten Schenkel (28) des zweiten Schlitzes (18) ist.

7. Siegelelement nach Anspruch 5, **dadurch gekennzeichnet, dass** der Abstand zwischen dem äußeren Rand der Bohrung (30) des zweiten Schlitzes (18) und dem ersten Schenkel (20) des ersten Schlitzes (16) kleiner ist als der Abstand zwischen dem äußeren Rand der Bohrung (30) des zweiten Schlitzes (18) und dem Scheitelpunkt (42) des ersten Schlitzes (16), und dass der Abstand zwischen dem äußeren Rand der Bohrung (30) des zweiten Schlitzes (18) und dem zweiten Schenkel (22) des ersten Schlitzes (16) kleiner ist als der Abstand zwischen dem äußeren Rand der Bohrung (30) des zweiten Schlitzes (18) und dem Scheitelpunkt (42) des ersten Schlitzes (16).

8. Siegelelement nach Anspruch 7, **dadurch gekennzeichnet, dass** der Abstand zwischen dem äußeren Rand der Bohrung (30) des zweiten Schlitzes (18) und dem ersten Schenkel (20) des ersten Schlitzes (16) gleich dem Abstand zwischen dem äu-βeren Rand der Bohrung (30) des zweiten Schlitzes (18) und dem zweiten Schenkel (22) des ersten Schlitzes (16) ist.

9. Siegelelement nach einem der vorangehenden Ansprüche, **dadurch gekennzeichnet, dass** es aus Edelstahl gebildet ist.

10. Siegelelement nach einem der vorangehenden Ansprüche, **dadurch gekennzeichnet, dass** das Verhältnis des Abstandes zwischen den beiden schmalen Seitenflächen (8, 10) zum Abstand zwischen oberer Oberfläche (4) und unterer Oberfläche (6) 1,8:1 nicht übersteigt, vorzugsweise 1,5:1 nicht übersteigt.

11. Siegelelement nach einem der vorangehenden Ansprüche, **dadurch gekennzeichnet, dass** die Bohrungen (24, 30) einen ovalen, vorzugsweise einen kreisförmigen Querschnitt aufweisen.

12. Siegelelement nach Anspruch 11, **dadurch gekennzeichnet, dass** die Höhe der Bohrungen (24, 30) das 3- bis 10-fache, vorzugsweise das 5- bis 8-fache der Höhe der Schlitze (16, 18) ist.

13. Siegelkörper mit mindestens zwei einstückig miteinander verbundenen Siegelelementen (1) nach einem der vorangehenden Ansprüche, wobei sich die einander zugewandten schmalen Seitenflächen (8, 46) der Siegelelemente (1) lediglich über einen Teil der Höhe der Siegelelemente (1) erstrecken und voneinander beabstandet sind, und wobei die Verbindung zwischen den Siegelelementen (1) über einen Steg (50) erfolgt, der unterhalb dieser einander zugewandten schmalen Seitenflächen (8, 46) der Siegelelemente (1) ausgebildet ist.

## Claims

1. Sealing element for integration into a sealing tool for producing smooth stamping fields during the sealing of two plastic sheets, the sealing element comprising
a main body (2) comprising an upper surface (4), a lower surface (6) for exerting a sealing force on the plastic sheets, two opposing narrow lateral faces (8, 10) and two opposing wide lateral faces (12, 14),
a first slot (16) and a second slot (18) being formed in the main body (2) and forming a spring element, the first slot (16) extending into the main body (2) from a first narrow lateral face (8) and the second slot (18) extending into the main body (2) from a second narrow lateral face (10) and vertically offset from the first slot (16), in such a way that the two slots (16, 18) define a portion of the main body (2), which portion is substantially in the shape of an S or a reversed S,
**characterised in that**
the slots (16, 18) are U-shaped, in each case a first leg (20, 26) of the slot (16, 18) being longer than a second leg (22, 28) of the slot (16, 18), and **in that** the two slots (16, 18) each expand at the inner region thereof to form a hole (24, 30).

2. Sealing element according to claim 1, **characterised in that** the slots (16, 18) have a low height.

3. Sealing element according to either claim 1 or claim 2, **characterised in that** the slots (16, 18) pass through the main body (2) in a transverse direction from a first wide lateral face (12) to a second wide lateral face (14).

4. Sealing element according to any of the preceding claims, **characterised in that** the two second legs (22, 28) are arranged between the two first legs (20, 26), **in that** the hole (24) of the first slot is located within the U-shape of the second slot (18), opposite the curve region (27) of the second slot (18), and **in that** the hole (30) of the second slot is located within the U-shape of the first slot (16), opposite the curve region (21) of the first slot (16).

5. Sealing element according to claim 4, **characterised in that** the distance between the outer edge of the hole (24) of the first slot (16) and the first leg (26) of the second slot (18) is smaller than the distance between the outer edge of the hole (24) of the first slot (16) and the apex (44) of the second slot (18), and **in that** the distance between the outer edge of the hole (24) of the first slot (18) and the second leg (28) of the second slot (18) is smaller than the distance between the outer edge of the hole (24) of the first slot (16) and the apex (44) of the second slot (18).

6. Sealing element according to claim 5, **characterised in that** the distance between the outer edge of the hole (24) of the first slot (16) and the first leg (26) of the second slot (18) is equal to the distance between the outer edge of the hole (24) of the first slot (16) and the second leg (28) of the second slot (18).

7. Sealing element according to claim 5, **characterised in that** the distance between the outer edge of the hole (30) of the second slot (18) and the first leg (20) of the first slot (16) is smaller than the distance between the outer edge of the hole (30) of the second slot (18) and the apex (42) of the first slot (16), and **in that** the distance between the outer edge of the hole (30) of the second slot (18) and the second leg (22) of the first slot (16) is smaller than the distance between the outer edge of the hole (30) of the second slot (18) and the apex (42) of the first slot (16).

8. Sealing element according to claim 7, **characterised in that** the distance between the outer edge of the hole (30) of the second slot (18) and the first leg (20) of the first slot (16) is equal to the distance between the outer edge of the hole (30) of the second slot (18) and the second leg (22) of the first slot (16).

9. Sealing element according to any of the preceding claims, **characterised in that** it is made of high-grade steel.

10. Sealing element according to any of the preceding claims, **characterised in that** the ratio of the distance between the two narrow lateral faces (8, 10) to the distance between the upper surface (4) and the lower surface (6) is not greater than 1.8:1, preferably not greater than 1.5:1.

11. Sealing element according to any of the preceding claims, **characterised in that** the holes (24, 30) have an oval, preferably a circular cross section.

12. Sealing element according to claim 11, **characterised in that** the height of the holes (24, 30) is 3 to 10 times, preferably 5 to 8 times the height of the slots (16, 18).

13. Sealing body comprising at least two integrally interconnected sealing elements (1) according to any of the preceding claims, wherein the narrow lateral faces (8, 46) which face one another of the sealing elements (1) extend only over part of the height of the sealing elements (1) and are spaced apart from one another, and wherein the sealing elements (1) are connected via a web (50) which is formed below these narrow lateral faces (8, 46) which face one another of the sealing elements (1).

## Revendications

1. Elément de scellement pour l'intégration dans un coutil de scellement destiné à produire des champs d'imprégnation lisses lors du scellement de deux feuilles, comprenant
un corps de base (2), qui présente une surface supérieure (4), une surface inférieure (6) pour exercer une force de scellement sur les feuillets, surfaces latérales étroites (8, 10) en vis-à-vis et deux surfaces latérales larges (12, 14) en vis-à-vis,
une première fente (16) et une seconde fente (18), qui forment un élément à ressort, étant réalisées dans le corps de base (2), la première fente (16) pénétrant à partir d'une première surface latérale étroite (8) dans le corps de base (2) et la seconde fente (18), déportée en hauteur par rapport à la première fente (16), pénétrant à partir d'une seconde surface latérale étroite (10) dans le corps de base (2), de tells sorte que les deux fentes (16, 18) définissent une section du corps de base (2), qui présente essentiellement une forme en S ou une forme en S inversée,
**caractérisé en ce que**
les fentes (16, 18) sont configurées en U, une première branche (20, 26) de la fente (16, 18) étant respectivement plus longue qu'une seconde branche (22, 28) de la fente (16, 18), et que les deux fentes (16, 18) s'élargissent chacune sur leur zone d'extrémité intérieure en un alésage (24, 30).

2. Elément de scellement selon la revendication 1, **caractérisé en ce que** les fentes (16, 18) présentent une hauteur faible.

3. élément de scellement selon l'une des revendications 1 et 2, **caractérisé en ce que** les fentes (16, 18) pénètrent au travers du corps de base (2) dans une direction transversale, d'une première surface latérale largue (12) en direction d'une seconde surface latérale largue (14).

4. Elément de scellement selon l'une des revendications précédentes, **caractérisé en ce que** les deux secondes branches (22, 28) sont disposées entre les deux premières branches (20, 26), que l'alésage (24) de la première fente est disposé à l'intérieur de la forme en U de la seconde fente (18) par rapport à la zone en arc (27) de la seconde fente (18), et que l'alésage (30) de la seconde fente est disposé à l'intérieur de la forme en U de la première fente (16) par rapport à la zone en arc (21) de la première fente (16).

5. Elément de scellement selon la revendication 4, **caractérisé en ce que** l'écartement entre le bord extérieur de l'alésage (24) de la première fente (16) et la première branche (26) de la seconde fente (18) est plus petit que l'écartement entre le bord extérieur de l'alésage (24) de la première fente (16) et le sommet (44) de la seconde fente (18), et que l'écartement entre le bord extérieur de l'alésage (24) de la première fente (18) et la seconde branche (28) de la seconde fente (18) est plus petit que l'écartement entre le bord extérieur de l'alésage (24) de la première fente (16) et le sommet (44) de la seconde fente (18).

6. Elément de scellement selon la revendication 5, **caractérisé en ce que** l'écartement entre le bord extérieur de l'alésage (24) de la première fente (16) et la première branche (26) de la seconde fente (18) est égal à l'écartelent entre le bord extérieur de l'alésage (24) de la première fente (16) et la seconde branche (28) de la seconde fente (18).

7. élément de scellement selon la revendication 5, **caractérisé en ce que** l'écartement entre le bord extérieur de l'alésage (30) de la seconde fente (18) et la première branche (20) de la première fente (16) est plus petit que l'écartement entre le bord extérieur de l'alésage (30) de la seconde fente (18) et le sommet (42) de la première fente (16), et que l'écartement entre le bord extérieur de l'alésage (30) de la seconde fente (18) et la seconde branche (22) de la première fente (16) est plus petit que l'écartement entre le bord extérieur de l'alésage (30) de la seconde fente (18) et le sommet (42) de la première fente (16).

8. Elément de scellement selon la revendication 7, **caractérisé en ce que** l'écartement entre le bord extérieur de l'alésage (30) de la seconde fente (18) et la première branche (20) de la première fente (16) est égal à l'écartement entre le bord extérieur de l'alésage (30) de la seconde fente (18) et la seconde branche (22) de la première fente (16).

9. élément de scellement selon l'une des revendications précédentes, **caractérisé en ce qu'**il est formé d'acier spécial.

10. élément de scellement selon l'une des revendications précédentes, **caractérisé en ce que** le rapport de l'écartelent entre les deux surfaces latérales étroites (8, 10) à l'écartement entre la surface supérieure (4) et la surface inférieure (6) ne dépasse pas par le haut 1,8 : 1, de préférence 1,5 : 1.

11. Elément de scellement selon l'une des revendications précédentes, **caractérisé en ce que** les alésages (24, 30) présentent une section transversale ovale, de préférence circulaire.

12. Elément de scellement selon la revendication 11 , caractérisé en ce la hauteur des alésages (24, 30) est de 3 à 10 fois, de préférence de 5 à 8 fois la hauteur des fentes (16, 18).

13. Corps de scellement comprenant au moins deux éléments de scellement (1) assemblés d'une seule pièce entre eux selon l'une des revendications précédentes, les surfaces latérales étroites (8, 46), tournées l'une vers l'autre, des éléments de scellement (1) s'étendant uniquement sur une partie de la hauteur des éléments de scellement (1) et étant distantes l'une de l'autre, et l'assemblage entre les éléments de scellement (1) s'effectuant par l'intermédiaire d'une traverse (50), réalisée au-dessous de ces surfaces latérales étroites (8, 46) , tournées l'une vers l'autre, des éléments de scellement (1).
